# EUROPEAN PATENT SPECIFICATION

(11) **EP 2 638 299 B1**
(45) Date of publication and mention of the grant of the patent: **23.03.2016**
(21) Application number: 11778648.3
(22) Date of filing: 04.11.2011
(51) Int. Cl.: F16B 43/00

(54) **Washing machine**
Waschmaschine
Machine à laver

(30) Priority: 10.11.2010 TR 201009344
(43) Date of publication of application: 18.09.2013
(73) Proprietor: Arçelik Anonim Sirketi, 34950 Istanbul (TR)
(72) Inventor: TIMAC, Gokhan, 34950 Istanbul (TR); HIZAL, Sabih, 34950 Istanbul (TR)
(86) International application number: PCT/EP2011/069478
(87) International publication number: WO 2012/062674

(56) References cited:
- DE-U- 7 128 124
- GB-A- 736 480
- JP-A- 2 283 910
- JP-B1- S5 224 188
- US-A- 5 402 568

## Description

The present invention relates to a screw used in the connection of balance weights utilized in household appliances.

Balance weights are used in order to decrease vibrations generated during the operation of household appliances like the washing machine, the dishwasher or the oven. For example in washing machines, especially in the spin-drying step wherein the drum is rotated at high speeds, the unbalanced load resulting from the laundry and structural factors increases vibration and noise, and cause the washing machine to wear out. Furthermore, the spin-drying performance of the washing machine is adversely affected. In the state of the art, connecting balance weights, produced from heavy materials like concrete or metal, to the tub wherein the washing process is performed for balancing unbalanced load is a widely implemented method. The tub of the washing machine is generally produced from plastic material and the mechanical strength of plastic material is considerably lower than metal material. The balance weights are mounted to the plastic tub by screwing and damage occurs in the plastic bosses, providing connection of the balance weight to the tub, as a result of too much load and vibration. The screw connection points at the plastic tub become damaged due to reasons such as over-tightening of the screw, particularly during the production in automatic workbenches. Furthermore, the balance weight connection screw is screwed to the tub by automatic screwing machines by being previously grouped with the spring washer in order to provide a prestressed connection. Errors can occur in the grouping process of the spring washer with the connection screw, the spring washer may not stay in the desired position on the screw, be dislodged and problems occur in the automatic screwing process.

In the European Patent Application No. EP1834025, a connection mechanism utilized in washing machines is explained, which comprises a spring washer providing the balance weight that assists to attenuate the forces applied during the operation by increasing the inertia of the washing tank to be attached to the washing tank as gap-free, which compensates the time-dependent loosening during the operation and which prevents the noise level from increasing which may be caused as the balance weight detaches from its fixed position.

In the German Patent No DE4238686, in the balance weight connection used in a washing machine, the connection of the plastic screw with the spring washer is explained so as to prevent loosening of plastic material due to elastic deflection in the course of time. A prestress is formed as the spring washer stretches in the axial direction.

A screw with a washer is known from JP 2283910 A

The aim of the present invention is the realization of a screw, used in connecting balance weights to household appliances and which is suitable for automation in production.

The screw realized in order to attain the aim of the present invention, explicated in the first claim and the respective claims thereof, used together with a spring washer in prestressed manner for connecting balance weights to the household appliances like the washing machine, comprises a cylindrical shoulder disposed right below the head portion, having a diameter wider than the screw diameter and whereon the spring washer is borne loose fittingly on the lateral surface and protuberances projecting outward from the lateral surface of the shoulder, thus increasing width of the shoulder, which are formed by pounding the lower surface of the shoulder or by opening indentations after the spring washer is fitted.

After the screw is grouped with the spring washer, indentations are opened on the lower surface of the shoulder below the screw head by impacting with a conical tipped device and these indentations form the protuberances by pushing the edge portion outwards wherein the lateral surface of the shoulder joins with the lower surface. While the lower surface of the shoulder is pounded inwards by means of the indentations, the protuberances push the lower portion of the lateral surface of the shoulder near the edge outwards. Since the spring washer is previously loosely fitted on the lateral surface of the shoulder, the protuberances prevent the spring washer from being dislodged out of the shoulder, in other words from the screw. Consequently, in automatic production, the spring washer and the screw are prevented from being grouped erroneously before the screwing process.

In an embodiment of the present invention, the screw comprises protuberances the surface whereon the spring washer is seated of which is round. In this embodiment, indentations are made on the lower surface of the shoulder by a special apparatus having a roundly shaped tip, creating rounded protuberances towards the outside from the lateral surface. The round protuberances considerably decrease the contact surface between the spring washer and the screw, hence the friction force, thereby preventing the spring washer and the screw from rotating together in the automatic screwing process.

In another embodiment of the present invention, protuberances are formed on the screw, such that there is a distance between the protuberances and the screw head, that is greater than the wall thickness of the spring washer and thus that provides the spring washer to rotate freely around its axis.

The protuberances formed by pounding or making indentations at the lower surface in the spring washer shoulder at the screw, provide the spring washer to be kept at the right position together with the screw before screwing process and during screwing process of the balance weight and any additional components are not needed to be used for holding the spring washer on the screw.

The balance weight connection screw realized in order to attain the aim of the present invention is illustrated in the attached figures, where:

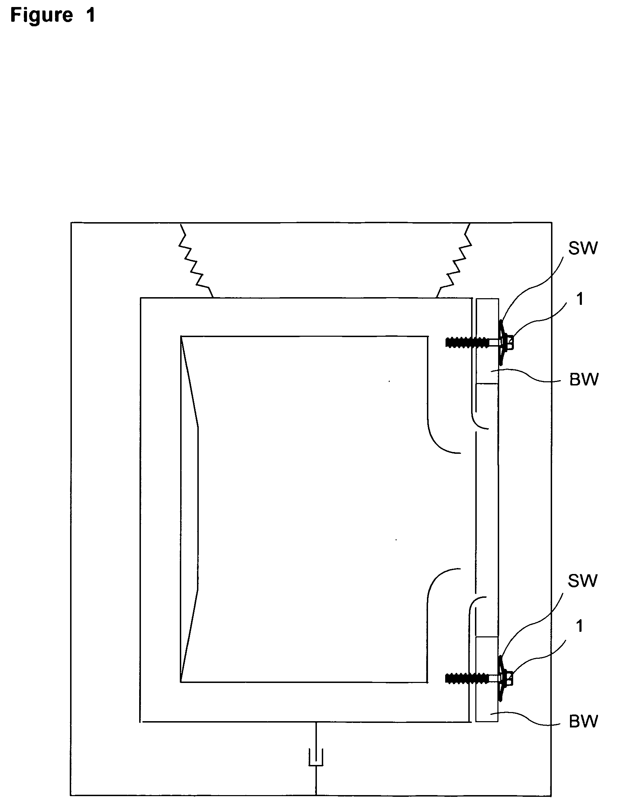

Figure 1 - is the schematic view of a washing machine wherein the balance weight is connected with connection screws.

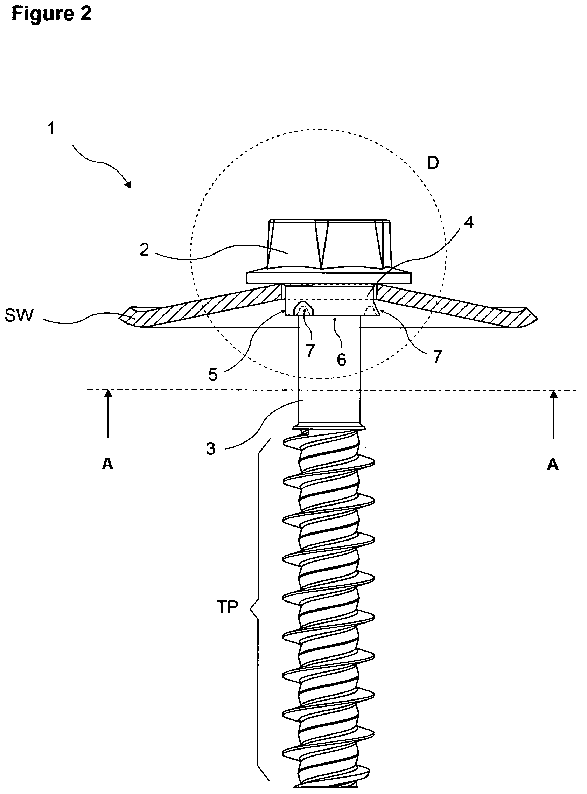

Figure 2 - is the front view of the connection screw grouped with a spring washer.
Figure 3 - is the view of detail D in Figure 2.

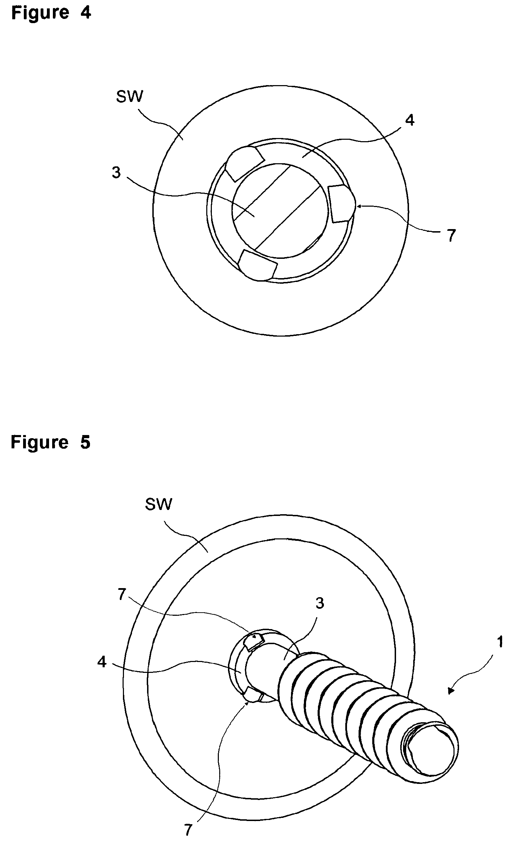

Figure 4 - is the view of the cross-section A-A in Figure 2.
Figure 5 - is the perspective view of the connection screw grouped with a spring washer.

The elements illustrated in the figures are numbered as follows:
1. Screw
2. Head
3. Shank
4. Shoulder
5. Lateral surface
6. Lower surface
7. Protuberance

BW : Balance weight
SW : Spring washer
TP : Threaded portion
M : Spring washer wall thickness

The screw (1) grouped with a spring washer (SW), suitable for using in the balance weight (BW) connection in household appliances, for example in washing machines, comprises a preferably flanged head (2), providing the screwing operation to be performed by being rotated, and a shank (3) extending under the head (2) having a threaded portion (TP) thereon. The spring washer (SW) is placed between the head (2) and the balance weight (BW), the head (2) stretches the spring washer (SW) by exerting pressure thereon during the screwing process, thus the balance weight (BW) is secured to the household appliance in prestressed manner.

The screw (1) of the present invention comprises a cylindrical shoulder (4) disposed on the part of the screw (1) where the shank (3) joins with the head (2), with a diameter wider than that of the shank (3) and whereon the spring washer (SW) is fitted, a lateral surface (5) where the spring washer (SW) is borne loose-fittingly on the shoulder (4), a planar lower surface (6) situated at the lower side of the shoulder (4) facing the shank (3) and protuberances (7) projecting outwards from the lateral surface (5), formed in the lateral surface (5) by opening indentations on the lower surface (6) or by pounding to deform the lower surface (6) after the spring washer (SW) is fitted to the shoulder (4).

In grouping process of the spring washer (SW) with the screw (1), first the spring washer (SW) is mounted to the shoulder (4) and afterwards the lower surface (6) of the shoulder (4) is deformed by opening indentations or by pounding. The indentations or the poundings made on the lower surface (6) form protuberances (7) that project out from the region bordered by the lateral surface (5) near the joining edge of the lateral surface (5) with the lower surface (6). The protuberances (7) widen the shoulder (4) near the joining edge of the lateral surface (5) so as to be greater than the diameter of the hole in the middle of the spring washer (SW), thus preventing dislodging of the spring washer (SW) from the shoulder (4).

The indentations or poundings formed at the lower surface (6) of the shoulder (4) form the protuberances (7) by pushing outwards the portion near the joining edge of the lateral surface (5) with the lower surface (6). In other words, the protuberances (7) formed by deforming the lower surface (6) with indentations or poundings, project outwards from the lateral surface (5). Since the spring washer (SW) is previously loosely fitted on the lateral surface (5), the protuberances (7) prevent the spring washer (SW) from dislodging from the lateral surface (5), that is from the shoulder (4).

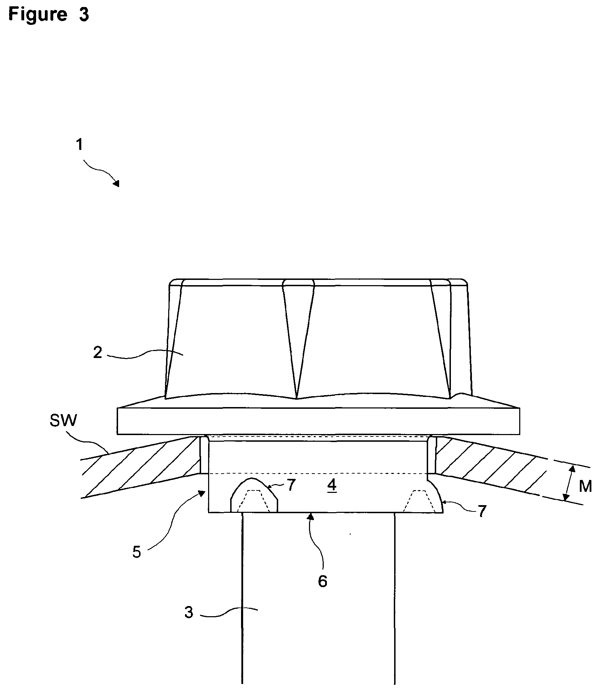

In an embodiment of the present invention, the screw (1) comprises protuberances (7) with a rounded surface against which the spring washer (SW) bears (Figure 3). In this embodiment, indentations are made on the lower surface (6) of the shoulder (4) by a special apparatus having a roundly shaped tip, creating rounded protuberances (7) towards the outside from the lateral surface (5). The rounded protuberances (7) provide the spring washer (SW) to stay fixed on the balance weight (BW) whereon it is seated and also the screw (1) to rotate at the center of the spring washer (SW), without rotating the spring washer (SW). The rounded protuberances (7) considerably decrease the contact surface between the spring washer (SW) and the screw (1) thus the friction force between the spring washer (SW) and the screw (1), and prevent the spring washer (SW) and the screw (1) from rotating together. Consequently, during the screwing process, the balance weight (BW) connection is realized, that is provided with the desired torque and screw (1) rotation number values and that is prevented from loosening in a short while.

In another embodiment of the present invention, in the screw (1) there is a distance between the protuberances (7) and the head (2), greater than the wall thickness (M) of the spring washer (SW) and accordingly providing the spring washer (SW) to freely rotate around its axis (Figure 3). The protuberances (7) only prevent the spring washer (SW) from dislodging from the shoulder (4), the spring washer (SW) can easily rotate around its axis even after being fitted on the shoulder (4) and the protuberances (7) are formed. In other words, the spring washer (SW) is not locked in between the protuberances (7) and the head (2), movement margin is left for the spring washer (SW) by means of the said protuberance (7) - head (2) distance on the shoulder (4).

In another embodiment of the present invention, the screw (1) comprises three protuberances (7) on the lower surface (6) equally spaced apart all around (with 120 degree angles), thus the spring washer (SW) is held from below in balanced manner on the screw (1) as per the plane principle defined by three points, production errors are avoided by means of the spring washer (SW) remaining in the correct position during the automatic screwing process of the balance weight (BW).

In the connection process of the balance weight (BW) by the automatic screwing machine, the spring washers (SW), grouped so as not to dislodge from the screws (1) by means of the screws (1) and the protuberances (7), proceed in the production line and the automatic screwing machine holds and brings the screw (1) and spring washer (SW) to the balance weight (BW) screwing position, presses the spring washer (SW) to the balance weight (BW) and rotates the head (2) thereby performing the screwing process. In the screwing process, the spring washer (SW) stretches by bearing against the balance weight (BW) and thus the balance weight (BW) is connected to the household appliance in prestressed manner. The protuberances (7) hold the spring washer (SW) on the screw (1) in a balanced position before the screwing process and during the screwing process thus preventing production errors from occurring.

In the balance weight (BW) connection screw (1), the protuberances (7) formed on the lateral surface (5) by opening indentations or by pounding the lower surface (6) of the shoulder (4) un necessitates additional components for holding the spring washer (SW) on the screw (1) during production by automatic screwing machines, thus providing savings in the number of elements used.

It is to be understood that the present invention is not limited by the embodiments disclosed above and a person skilled in the art can easily introduce different embodiments. These should be considered within the scope of the protection postulated by the claims of the present invention.

## Claims

1. A washing machine **characterized by** a balance weight (BW) connected by using a screw (1) grouped with a spring washer (SW), said screw comprising:
- a head (2), providing the screwing operation to be performed by being rotated and a shank (3) extending under the head (2) having a threaded portion (TP) thereon,
- a cylindrical shoulder (4) disposed on the part of the screw (1) where the shank (3) joins with the head (2), with a diameter greater than that of the shank (3) and whereon the spring washer (SW) is mounted,
- a lateral surface (5) where the spring washer (SW) is borne loose-fittingly on the shoulder (4),
- a planar lower surface (6) situated at the lower part of the shoulder (4) facing the shank (3),
- protuberances (7) formed on the lateral surface (5) by deforming the lower surface (6) after the spring washer (SW) is mounted to the shoulder (4), projecting outward from the lateral surface (5),
wherein the surface of the protuberances (7) whereon the spring washer (SW) bears against is rounded, and wherein the protuberances (7) have a distance between themselves and the head (2) that is greater than the wall thickness (M) of the spring washer (SW) and accordingly providing the spring washer (SW) to freely rotate around its axis.

2. A washing machine as in Claim 1, **characterized by** three protuberances (7) arranged at regular intervals along the edge of the lower surface (6) all around.

## Patentansprüche

1. Waschmaschine, **gekennzeichnet durch** ein Ausgleichsgewicht (BW), das mithilfe einer Schraube (1) verbunden ist, die mit einer Federscheibe (SW) kombiniert ist, wobei die Schraube Folgendes umfasst:
- einen Kopf (2), der eine Betätigung der Schraube **durch** Drehen ermöglicht, und einen Schaft (3), der sich unter dem Kopf (2) erstreckt und einen Gewindeabschnitt (TP) daran aufweist,
- eine zylindrische Schulter (4), die an dem Teil der Schraube (1) angeordnet ist, an dem sich der Schaft (3) mit dem Kopf (2) verbindet, und dessen Durchmesser größer als der des Schafts (3) ist und auf dem die Federscheibe (SW) angebracht ist,
- eine Seitenfläche (5), an der die Federscheibe (SW) lose sitzend von der Schulter (4) getragen wird,
- eine flache untere Fläche (6), die am unteren Teil der Schulter (4) angeordnet ist und dem Schaft (3) zugewandt ist,
- Wölbungen (7), die an der Seitenfläche (5) gebildet sind, indem die untere Fläche (6) nach dem Anbringen der Federscheibe (SW) an der Schulter (4) verformt wird, und die von der Seitenfläche (5) nach außen vorspringen,
wobei die Fläche der Wölbungen (7), an denen die Federscheibe (SW) anliegt, gerundet ist, und wobei die Wölbungen (7) einen Abstand zwischen sich und dem Kopf (2) aufweisen, der größer als die Wanddicke (M) der Federscheibe (SW) ist, und auf diese Weise ermöglichen, dass die Federscheibe (SW) sich frei um ihre Achse dreht.

2. Waschmaschine nach Anspruch 1, **gekennzeichnet durch** drei Wölbungen (7), die in regelmäßigen Intervallen an der Kante der unteren Fläche (6) um den gesamten Umfang herum angeordnet sind.

## Revendications

1. Un lave-linge **caractérisé par** un poids d'équilibrage (BW) connectée en utilisant une vis (1) groupée avec une rondelle à ressort (SW), ladite vis comprenant
- une tête (2) qui permet la réalisation du vissage en étant tournée et une tige (3) qui s'étend au-dessous de la tête (2), présentant une partie filetée (TP) sur celle-ci,
- un épaulement cylindrique (4) qui est disposé sur la partie de la vis (1) où la tige (3) se joint à la tête (2), présentant un diamètre plus large que la tige (3), et sur lequel la rondelle à ressort (SW) est montée,
- une surface latérale (5) où la rondelle à ressort (SW) est supportée par l'ajustement libre sur l'épaulement (4),
- une surface inférieure plate (6) qui est située sur la partie inférieure de l'épaulement (4) faisant face à la tige (3),
- des protubérances (7) qui sont formées sur la surface latérales (5) par la déformation de la surface inférieure (6) après que la rondelle à ressort (SW) est montée sur l'épaulement (4), faisant saillie à partir de la surface latérale (5),
où les surfaces des protubérances (7) sur lesquelles la rondelle à ressort (SW) s'appuie sont arrondies, et où les protubérances (7) présentent une distance entre elles et la tête (2) qui est plus large que l'épaisseur de paroi (M) de la rondelle à ressort (SW) et par conséquent permettant la rotation libre de la rondelle à ressort (SW) autour son axe.

2. Un lave-linge (1) selon la Revendication 1, **caractérisé par** trois protubérances (7) qui sont arrangées à intervalles réguliers le long du bord de la surface inférieure (6) tout autour.
